# EUROPÄISCHE PATENTSCHRIFT

(11) **EP 1 648 021 B1**
(45) Veröffentlichungstag und Bekanntmachung des Hinweises auf die Patenterteilung: **02.11.2011**
(21) Anmeldenummer: 05021136.6
(22) Anmeldetag: 28.09.2005
(51) Int. Cl.: H01J 61/33, H01J 61/073

(54) **Hochleistungsentladungslampe**
High-intensity discharge lamp
Lampe à décharge de grande puissance

(30) Priorität: 18.10.2004 GB 0423096
(43) Veröffentlichungstag der Anmeldung: 19.04.2006
(73) Patentinhaber: Heraeus Noblelight Ltd., Cambridge Cb4 0GQ (GB)
(72) Erfinder: Krönert, Uwe, Professor Dr., 67752 Wolfstein (DE); Woffendin, Jeremy, Cherry Hinton Cambridge, CB1 9XF (GB)
(74) Vertreter: Kühn, Hans-Christian

(56) Entgegenhaltungen:
- BG-A1- 50 699
- JP-A- 8 124 521
- US-A- 5 898 270

## Beschreibung

Die Erfindung betrifft Laseranregungslampen mit einer Entladungsröhre und einer heiß betriebenen stiftförmigen Kathode, deren Verwendung als Pumplichtquelle für Laser und die Herstellung derartiger Lampen.

Die vorliegende Erfindung gleicht eine Hochleistungsentladungslampe bzw. Pumplichtquelle mit stiftförmiger Kathode an alte Lasergerätetypen an. Die angepasste Laserlampe umfasst eine so genannte Stiftkathode, die in Form eines Stabs vorliegt und kein spitzes Ende hat. Solche Laserlampen sind aus DE 102 08 585 bekannt und haben im Vergleich zu Standardlampen, die mit einer Kathode mit spitzem Ende versehen sind, eine längere Lebensdauer. Die Stiftkathode dieser Lampe ist im Wesentlichen nur strahlungsgekühlt und lässt sich deshalb heiß betreiben. Aus DE 102 08 585 sind Lampen mit einer Stiftelektrode bekannt, bei denen die Kathode keine spitze Form hat und die kein Emittermaterial haben. Außerdem ist um die Kathode, d.h. zwischen der Kathode und der Entladungsröhre, viel Raum vorhanden.

Solche Lampen finden in Hochleistungsfestkörperlasern (HPSSL, high-power solid-state laser) Verwendung. Darunter fallen Laser, in denen als laseraktives Medium ein Laserkristall eingesetzt wird. Der Kristall kann jede beliebige Form haben, jedoch ist die scheibenförmige oder stabförmige Ausführung üblich.

Ein ernsthaftes Problem bei alten Lasergerätetypen stellt der Startvorgang dar, weil die Steuerungen dieser alten Lasergerätetypen den Startvorgang nicht zuverlässig steuern können. Obwohl solche Lasergeräte unter hohem Aufwand angepasst werden können, wurden üblicherweise die alten Standardlampen mit kurzer Lebensdauer eingesetzt, so dass die Lasersteuerung das Lasergerät zuverlässig steuert und umfangreiche Investitionen vermieden werden. Lampen vom Standardtyp haben eine spitze Kathode, die den vollen Durchmesser der Entladungsröhre in einem Bereich von einigen Millimetern hinter der Spitze erreicht.

Die vorliegende Erfindung stellt sich die Aufgabe, die beim Startvorgang alter Lasergerätetypen bestehenden Probleme der neuen Hochleistungslaserlampen zu lösen, die eine Stiftkathode aufweisen und daher eine längere Lebensdauer besitzen.

Die vorliegende Erfindung stellt sich besonders die Aufgabe, eine Laseranregungslampe bzw. Pumplichtquelle vorzusehen, deren Verhalten beim Startvorgang im Vergleich zum vorigen Stand der Technik zuverlässiger ist.

Die Aufgabe wird durch die unabhängigen Ansprüche gelöst. In den abhängigen Ansprüchen sind vorteilhafte Ausführungen beschrieben.

Im Rahmen der vorliegenden Erfindung wurde erkannt, dass alte Lasergerätetypen den Startvorgang einer Laserpumplampe über ein Maß der Lampenspannung nach einem bestimmten Zeitraum, typischerweise nach einigen Millisekunden, steuern, nachdem die Lampe einem Hochspannungsauslöseimpuls ausgesetzt wurde. Zündet die Lampe nicht, so nimmt die Lampenspannung den Maximalwert der Leerlaufspannung der Lampenstromversorgung an. Bei einer nicht erfolgreichen Zündung ist sie jedoch signifikant höher als die bei normalem Lampenbetrieb erwartete Spannung. Wird eine zu hohe Spannung erkannt, stoppt die Lasersteuerung den Lampenstartvorgang und geht in den Ausfallzustand über.

Der mit einer Stiftkathode versehene neue Lampentyp kann nach der Lampenzündung kurzfristig eine höhere Lampenspannung annehmen, die bei Standardlampen mit spitzer Kathode nicht bekannt ist. Dieses Überschwingen der Spannung ist nicht eine Folge der Lampenzündung, sondern eine Eigenschaft der Stiftkathodenlampe, bei der der Abstand zwischen der Kathode und dem Quarzglas entlang der Kathode groß ist. Nach einigen Millisekunden fällt die Lampenspannung auf die bei normalem Lampenbetrieb erwartete Spannung ab.

Die Lösung dieser Aufgabe gelingt durch eine Verminderung des Gasraumvolumens bzw. des Querschnitts des Gasraums, im folgenden als freier Querschnitt bezeichnet, im Bereich der Stifikathode, durch eine Verminderung des Abstands zwischen der Kathode und der Quarzglasröhre, durch einen vergrößerten Außendurchmesser der kathode.

Es wird also bei Entladungslampen mit einer heiß betriebenen Kathode in Form eines Stifts das bislang vom Innendurchmesser des sich konstant um die Kathode und den Entladungsraum erstreckenden Hüllrohres definierte Gasvolumen im Bereich der Kathode reduziert, das heißt, dass der freie Querschnitt im Bereich der Kathode reduziert wird.

Erfindungsgemäß werden also Lampen mit einem gegenüber DE 102 08 585 - das heißt Laseranregungslampen mit einer Entladungsröhre und einer heiß betriebenen Kathode in Form eines Stifts - in ihrem Kathodenraum eingeschränkt, das heißt, dass erfindungsgemäß an diesen Lampen eine Verminderung des Gasraumvolumens bzw. freien Querschnitts im Bereich der Stiftkathode realisiert wird.

So betrifft die vorliegende Erfindung eine Laseranregungslampe mit einer Entladungsröhre aus Quarzglas, sowie einer heiß betriebenen Kathode in Form eines Stiftes, wobei die Laseranregungslampe eine Verminderung des Gasraumvolumens im Bereich der Glühkathode aufweist, wobei die Verminderung durch eine Verminderung des Abstandes zwischen der Kathode und der Entladungsröhre gebildet wird, wobei die Verminderung des Abstandes zwischen der Kathode und der Entladungsröhre durch einen vergrößerten Außendurchmesser der Kathode gebildet wird und die Glühkathode an dem Entladungsraum abgewandten Ende mit einer Temperatur von mehr als 1800°C versorgbar ist.

Die Besonderheit der stiftförmigen Kathode liegt darin, dass das dem Entladungsraum zugewandte Ende der Elektrode im Wesentlichen strahlungsgekühlt ist und somit nur in untergeordnetem Maß durch Wärmefluss innerhalb der Elektrode oder über den Gasraum und die Wand des Hüllrohres gekühlt wird. Damit ist die Abkühlungsfähigkeit der Elektrode stark vermindert, was wiederum zur Folge hat, dass die Temperatur nach dem Entladungsvorgang nur langsam abkühlt mit der weiteren Folge, dass die Temperaturschwankung bis zum nächsten Entladungsvorgang geringer gehalten wird als bei an stärker über die Elektrode oder den Gasraum und die Außenwand abkühlbaren Elektroden. Die Langlebigkeit der Kathode hängt damit zusammen, dass sie durch die verringerte Kühlung heiß betrieben werden kann. Selbstverständlich weisen derartige Entladungslampen einen von einer Umhüllung eingeschlossenen Gasraum auf, in dem auch die Elektroden angeordnet sind. Erfindungsgemäß werden Maßnahmen getroffen, die den Gasraum bzw. freien Querschnitt im Bereich der Kathode im Unterschied zu dem sich weiter in den Entladungsraum erstreckenden Gasraum bzw. freien Querschnitt einengen. Die Einengung geschieht in einem sich radial um die Kathode erstreckenden Bereich bzw. einem sich diesen Bereich dem Entladungsraum zugerichteten Bereich nahe der Elektrodenarbeitsfläche. Der Gasentladungsraum ist bis auf sein gegebenenfalls nah am Kathodenraum liegenden Endstücks im Wesentlichen nicht von der Maßnahme zur Volumenreduzierung betroffen. Selbstverständlich sind auch die Maßnahmen zur Versiegelung der Umhüllung sowie das Einbringen der Kathode als notwendige Maßnahmen zur Erstellung einer Lampe zu betrachten und keinesfalls Maßnahmen zur Reduzierung des Gasvolumens gemäß der vorliegenden Erfindung. Die Volumenreduzierung bezieht sich stets auf bislang für eine heiß betriebene Kathode nicht in Erwägung gezogene Maßnahmen, wie beispielsweise eine vollständige oder teilweise Reduzierung des Innendurchmessers der Umhüllung im Bereich der Kathode oder beispielsweise das Einbringen von Füllmaterial in diesen Bereich. Diese relative Änderung des Raums bzw. freien Querschnitts im Bereich der Kathode in Relation zum unveränderten großen Mittelteil des Entladungsraums bzw. dessen freien Querschnitts ist mit Bezug auf einen minimalen Abstand zur Elektrode dadurch begrenzt, dass die Wärmeübertragung bei zu geringem Abstand an Bedeutung gewinnt und die Elektrode nicht mehr heiß betrieben werden kann. Auch lässt sich die Maßnahme der Volumenreduzierung nicht beliebig weit vom Kathodenende entfernt in den Entladungsraum verschieben, da einerseits die Entladung zunehmend gestört wird und andererseits der Adaptionseffekt an die Steuerung der alten Lasergeräte bereits nach kurzem Abstand vom Elektrodenende verloren geht.

Die vorliegende Erfindung verändert die Eigenschaften der Laserlampe auf eine Weise, die einen Vergleich des zeitabhängigen Ansprechens der Lampenspannungsreaktion auf den Zündstrom mit dem bei Standardlampen mit spitzer Kathode auftretenden Ansprechen zulässt. Dies ermöglicht eine zuverlässige Verwendung von Laserlampen mit heißer Stiftkathode in alten Lasergeräten.

Somit sind an den Lasergeräten, die bereits weltweit in Gebrauch sind, keine kostspieligen Änderungen erforderlich. Die Lebensdauer der Pumplichtquelle kann durch die zuverlässigere Zündcharakteristik verlängert werden.

Gut bewährt haben sich Entladungsröhren aus Quarzglas. Solch eine Quarzglasröhre weist an einer beliebigen Stelle entlang der Kathode einen geringeren Innendurchmesser als im Entladungsbereich auf. Daher umfasst die vorliegende Erfindung auch eine Laserlampe mit einem kleinen Abstand zwischen der Quarzglasröhre und der Kathode, insbesondere einen Abstand von höchstens 2 mm, vorzugsweise einen Abstand von höchstens 1 mm und ganz bevorzugt einen Abstand von höchstens 0,5 mm. Andererseits ist der Abstand ausreichend groß, so dass das Stiftende durch Wärmeleitung nicht wirkungsvoll gekühlt wird. Bei einem Abstand von 0,1 mm, insbesondere bei einem Abstand von 0,2 mm, findet die Kühlung der Kathode durch Wärmeleitung praktisch nur über die Lampendichtung und die Stromeinspeisung statt. Die Temperatur kann bei einem Wert über 1.800 °C aufrecht erhalten werden.

Das Gasraumvolumen entlang der Kathode kann vermindert werden, indem der Abstand zwischen der Kathode und der Quarzummantelung entlang der Kathode reduziert wird.

Es ist nicht nötig, den Bereich des verminderten Volumens über die gesamte Länge der Kathode auszudehnen. Außerdem stellt das dem Entladungsraum zugewandte Ende der Stiftkathode, die Kathodenarbeitsfläche keinen kritischen Faktor für den Bereich des verminderten Volumens dar. Das verminderte Volumen kann auch einen Bereich von 0,5 mm vor der Kathodenarbeitsfläche (in den Entladungsraum hinein) einnehmen, sollte aber nicht 3 mm vor der Kathodenarbeitsfläche überschreiten. Es ist ebenso nicht nötig, dass das andere Ende des verminderten Volumenbereichs bis zu der Durchführungsdichtung hinten an der Stiftkathode reicht. Somit kann sich der verminderte Volumenbereich an einer beliebigen Stelle zwischen der Durchführungsdichtung und der Stiftkathode entlang befinden und kann sich optional geringfügig bis über die Kathodenarbeitsfläche des Kathodenendbereichs erstrecken. Vorzugsweise erstreckt sich das verminderte Volumen von einer Stelle, die sich 0,5 mm hinter der Kathodenarbeitsfläche befindet, bis zur Durchführungsdichtung der Kathode. Die Form des verminderten Bereichs ist unwesentlich, so dass der verminderte Bereich jede beliebige Form annehmen kann. Vorzugsweise ist der Bereich des verminderten Volumens zylinderförmig.

Die Laserlampe kann mit Röhren mit unterschiedlichen Innendurchmessern hergestellt werden. Danach wird eine Quarzglasröhre mit einem kleinen Innendurchmesser entlang der Kathode angeordnet.

Die Röhre mit dem kleinen Innendurchmesser kann den gleichen Außendurchmesser wie die Röhre mit dem großen Innendurchmesser haben, und beide Röhren können fest aneinander angesetzt sein. In diesem Fall ist die Wand der Röhre mit dem kleinen Innendurchmesser stärker als die Wand der Röhre mit dem großen Innendurchmesser.

Es ist auch zweckmäßig, eine Röhre in die andere Röhre einzuführen, um so den Gasraum im Bereich der Stiftkathode zu verringern. Darüber hinaus ist auch der Gebrauch von Quarzröhren bewährt, bei denen der Außendurchmesser der einen Röhre fast gleich dem Innendurchmesser der anderen Röhre ist.

In weiteren bevorzugten Ausführungen
- ist die Stiftkathode eine überwiegend stabförmige Lampenkathode, bei der der Teil nahe an der Stirnfläche des Stifts, der sich bis etwa 5 mm von der Kathodenarbeitsfläche aus erstreckt, jede beliebige Form haben kann (zum Beispiel eine "abgerundete Stirnfläche" mit beliebigem Radius, der typischerweise dem Radius des Stifts selbst entspricht, oder kugelförmig);
- beträgt der Durchmesser der stabförmigen Elektrode weniger als 3 mm, insbesondere 1 mm bis 2,5 mm;
- beträgt die Länge der stabförmigen Elektrode 10 bis 40 mm, insbesondere 20 bis 35 mm;
- ist die Hülle der Lampe eine Entladungsröhre aus Quarzglas, die den Teil der Lampe umhüllt, in dem die elektrische Entladung oder der Lichtbogen stattfindet; diese Röhre bestimmt die Eigenschaften des Lichtbogens, wie z.B. den Ort, den Durchmesser und die Temperatur des Lichtbogens,
- besteht der Quarz oder das Quarzglas aus äußerst reinem amorphen SiO₂. Dieses kann Dotierstoffe enthalten, damit bestimmte für den Lampenbetrieb erforderliche physikalische Eigenschaften erfüllt werden, wie zum Beispiel die Transparenz im optischen Bereich des elektromagnetischen Spektrums. Es kann sich dabei um natürlichen Quarz oder um synthetisches Quarzglas handeln. Im allgemeinen wird beliebiges amorphes SiO₂ verwendet, das eine hohe Temperaturbeständigkeit und im Wellenlängenbereich von 500 nm bis 1000 nm eine hohe Transparenz hat.

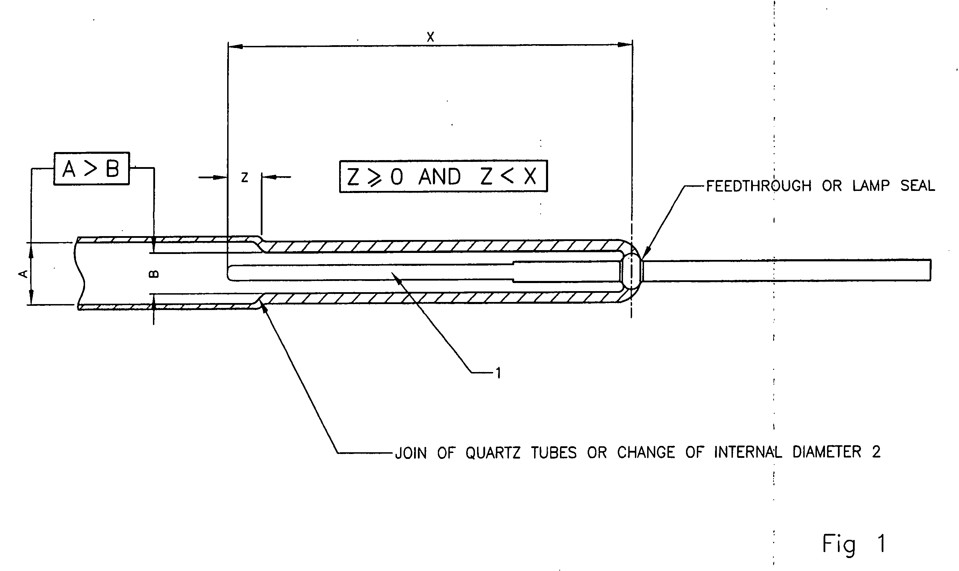

Der durch die Lampendichtung führende Draht hat vorzugsweise einen Durchmesser von mindestens 1,5 mm und entspricht höchstens dem Innendurchmesser der die Dichtung bildenden Quarz- oder Glashülle, wie in Figur 1 bis 3 gezeigt. Dann werden bei der Kühlung der Lampendichtung und Stromeinspeisung Temperaturen von höchstens 250 °C erreicht, so dass die externen Strom- und Mechanikadapter gegen Überhitzung geschützt sind.

Im Folgenden wird die Erfindung beispielhaft unter Bezugnahme auf die beiliegenden Zeichnungen beschrieben. Es zeigen:
Figur 1 zeigt einen Querschnitt durch den Endteil einer Lampe, die einen Kathodenstift 1 enthält, bei dem sich der kleinere Durchmesser der Quarzglasröhre im Bereich des Kathodenstifts befindet, angeschlossen an eine Röhre mit einem größeren Innen- und Außendurchmesser.
Figur 2 zeigt einen Querschnitt durch den Endteil einer Lampe, die einen Kathodenstift 1 enthält, bei dem sich der kleinere Durchmesser der Quarzglasröhre im Bereich des Kathodenstitts betindet, angeschiossen an eine Röhre mit dem gleichen Außendurchmesser, jedoch mit einem größeren Innendurchmesser.
Figur 3 zeigt einen Querschnitt durch den Endteil einer Lampe, die einen Kathodenstift enthält, bel dem sich der kleinere Durchmesser der Quarzglasröhre im Bereich des Kathodenstifts befindet. Die Röhre mit dem größeren Innendurchmesser erstreckt sich über die gesamte Lampenlänge. Eine Röhre mit kleinerem Innendurchmesser wird entlang der Kathode eingeführt, um so einen verminderten Volumenbereich zu erzielen.
Figur 4 zeigt einen Plasmalichtbogen einer Glühkathode, der mehr als 50% der Kathodenstirnfläche einnimmt.
Figur 5 zeigt einen Plasmalichtbogen einer Kaltkathode, der weniger als 50% der Kathodenstirnfläche einnimmt.
Figur 6 zeigt ein vermindertes Volumen im Bereich der Arbeitsfläche.

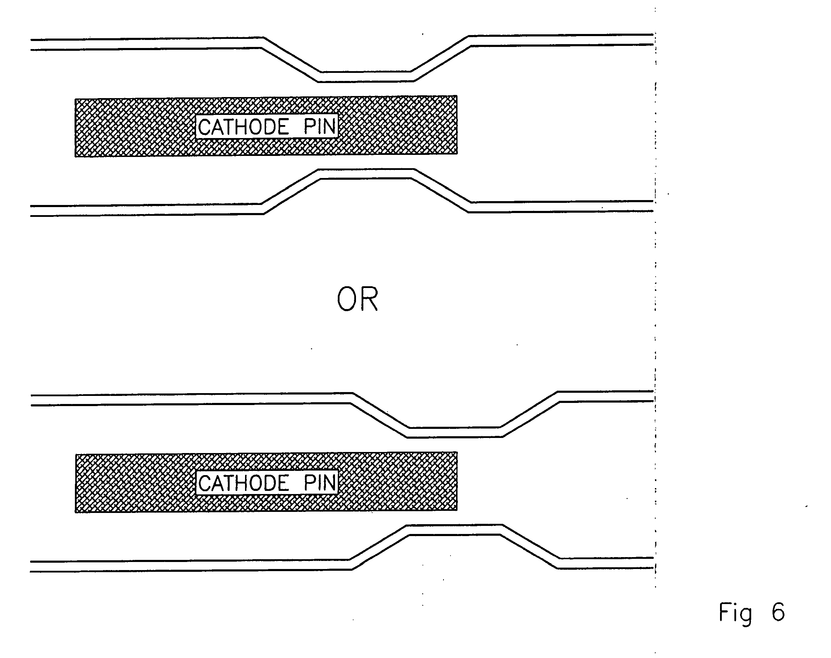

Die Maßangaben in den Abbildungen 1 bis 3 beziehen sich auf folgende Dimensionen:
- A: ist der Innendurchmesser des Entladungsrohres der Laseranregungslampe in dem Be- reich, in dem die eigentliche Entladung stattfindet.
- B: ist der Innendurchmesser des reduzierten Volumens entlang der Stiftkathode, genauer der Innendurchmesser des der Stiftkathode zugewandten und sich dieser am nächsten befindlichen Quarzrohres.
- A>B: gilt erfindungsgemäß für alle hier gezeigten Variationen.
- X: ist die Länge der Stiftkathode, gemessen von der Lampendichtung, genauer der Ein- schmelzstelle der Stromzuführung in den Lampenraum, bis zu Kathodenarbeitsfläche, genauer der dem Entladungsraum zugewandten Endfläche der Stiftkathode.
- Z: ist die Länge oder die Ausdehnung des Bereiches, in dem man entlang der Stiftkathode denselben Innendurchmesser des Lampenrohres hat, wie Im Entladungsbereich. Z wird von der Kathodenarbeitsfläche bis zu der Stelle gemessen, an der sich der Innendurch- messer des die Stiftkathode umgebenden Materials ändert.
- Z≥O: gilt für alle gezeigten Beispiele 1 - 3 (in Fig. 6 kann Z auch negativ werden).
- Z<X: gilt erfindungsgemäß, Z = X entspräche der Stiftkathodenlampe mit den zu verbessern- den Zündeigenschaften.

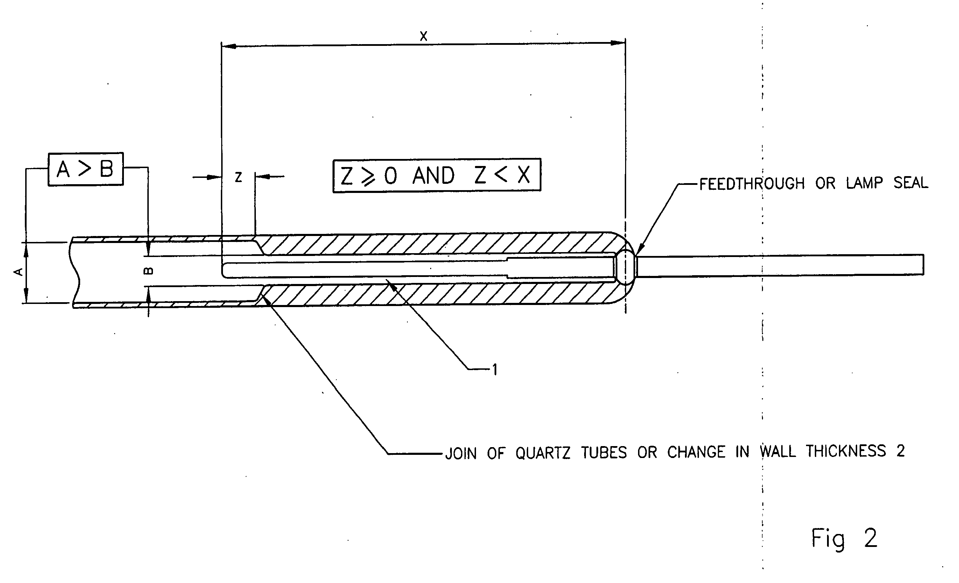

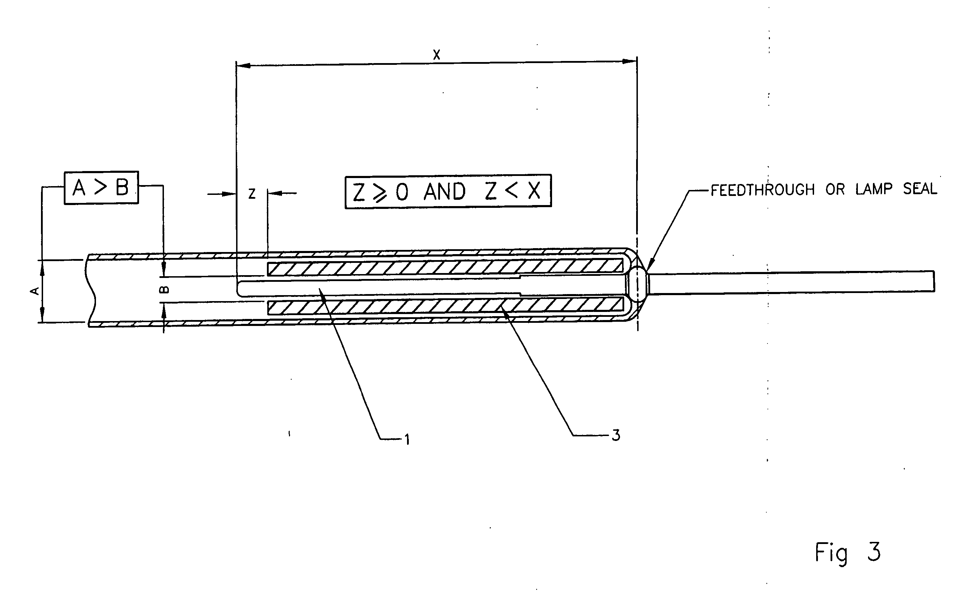

1) lm Beispiel gemäß Figur 1 sind der Außendurchmesser und der Innendurchmesser A der Quarzglasröhre im Bereich des Kathodenstifts kleiner. Zudem ist die Wanddicke im Bereich des Kathodenstifts 1 stärker als im Hauptteil der Quarzröhre. Eine solche Ausführung kann leicht durch Verbinden 2 von zwei Quarzröhren erreicht werden. Vorzugsweise entspricht der Außendurchmesser der einen Röhre in etwa dem Innendurchmesser der anderen Röhre. Zudem ist die Wanddicke der Röhre mit dem kleineren Durchmesser vorzugsweise stärker. Der geringere Durchmesser muss dabei nicht der Gesamtlänge X des Kathodenstifts 1 entsprechen. Er kann durch den gesetzten Parameter gekürzt werden, der in Bezug auf X vorzugsweise klein ist. Vorzugsweise beträgt die Länge der Lampe 10 bis 40 cm. Die bevorzugte Länge der Stiftkathode beträgt ungefähr 1 bis 3 cm, und die bevorzugte Länge von Z beträgt höchstens 1 cm.
2) In einer weiteren Ausführungsform gemäß Figur 2 haben die verschiedenen Röhren zwar den gleichen Außendurchmesser, jedoch hat die Röhre im Bereich des Kathodenstifts 1 eine stärkere Wanddicke, um so das erforderliche verminderte Volumen im Bereich des Kathodenstifts zu erzielen.
3) Eine weitere Ausführungsform gemäß Figur 3 zeigt eine Quarzlampe, die aus einer im Bereich der Stiftkathode 1 mit einem Füllmaterial 3 gefüllten Röhre besteht. Vorzugsweise handelt es sich bei dem Füllmaterial 3 um Quarzglas. Das Füllmaterial 3 ist von der Stiftkathode 1 beabstandet und kann auch von der Glasröhre beabstandet sein. Das Füllmaterial 3 ist vorzugsweise fest mit dem Bereich der Stiftkathode 1 verbunden. Bei dem Füllmaterial 3 handelt es sich vorzugsweise ebenso um eine Quarzröhre.
4) Ein verminderte Volumen im Kathodenendbereich (Figur 6) kann an einer beliebigen Stelle nahe der Kathodenarbeitsfläche angeordnet sein, um ein verminderte Volumen an der Stelle vorzusehen, an der der Lichtbogenansatz stattfindet. Das Volumen kann vermindert werden, indem zwei Quarzröhren mit unterschiedlichen Durchmessern miteinander verbunden werden. Eine andere Methode ist die Einführung eines kurzen Quarzstücks mit kleinerem Durchmesser in die Entladungsröhre. Vorzugsweise entspricht der Außendurchmesser der inneren Röhre fast dem Innendurchmesser der äußeren Röhre. Es ist auch möglich, die Entladungsröhre während ihrer Herstellung auf der Drehmaschine einer Wärmeanwendung zu unterziehen und den Durchmesser der Entladungsröhre durch Verformen des Quarzmaterials auf die erforderliche Größe zu reduzieren.

Die Stiftkathode wird zur Verminderung des Gasraumes verbreitert. Bewährt haben sich Kathoden mit einer Länge von 30 ± 3 mm und einem Durchmesser von 1,5 + 0,2 mm bis das Material und der Durchmesser (2 mm) geändert werden. Die Gesamtlänge beträgt bei dieser Ausführung 40 ± 4 mm bis zur Dichtung und 60 6 mm bis zur elektrischen Verbindung außerhalb der Lampe.

In dem durch die zylinderförmige Testlampe gepumpten Laser wird ein stabförmiger Kristall aus NdYAG (Neodym-Yttrium-Aluminium-Granat) oder ein ähnlicher durch zwei der oben erwähnten Laseranregungslampen gepumpter Kristall verwendet. Die Lampen und der Kristall sind in einer Kavität angeordnet, die die erforderlichen optischen Komponenten und thermischen Kühlkomponenten (Wasser) enthält. Ein Hochleistungsfestkörperlaser (HPSSL) besteht aus einer Kaskade zahlreicher solcher Kavitäten. Jede dieser Kavitäten liefert typischerweise eine Laserstrahlung von 500 bis 600 W, die aus einer Lampenleistung von 16 bis 22 kW umgewandelt wurde (die maximale Leistung jeder Lampe beträgt 11 kW, typischerweise 8 kW). Beim Testbeispiel sind 16 Kavitäten so angeordnet, dass sie einen Hochleistungsfestkörperlaser mit einer optischen Ausgangsleistung von 8 kW bilden.

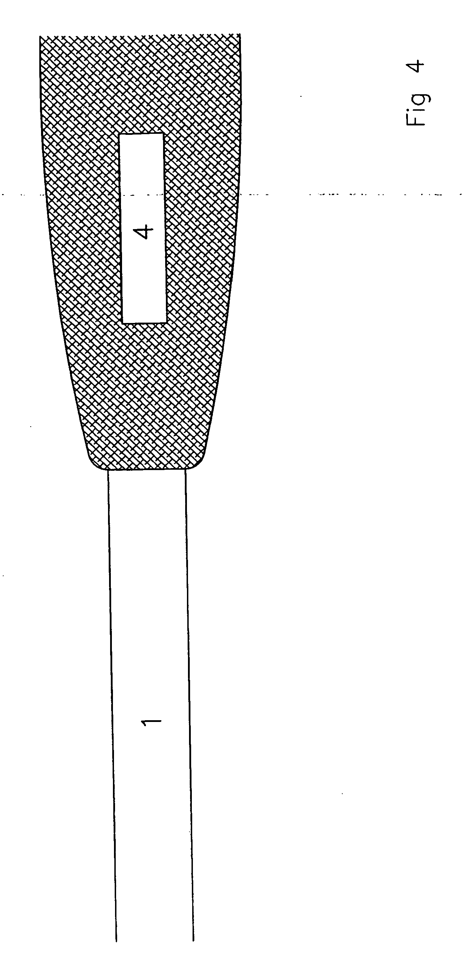

Der in Fig. 4 gezeigte Lichtbogenansatz ist ein so genannter diffuser Lichtbogenansatz 4 an der Kathode, der von Niederdrucklampen mit einem Betriebsdruck von höchstens 1.000 hPa und einem Entladungsstrom unter 5 A bekannt ist. Erfindungsgemäße Lampen haben einen hohen Betriebsdruck von mindestens 10.000 hPa und Betriebsströme in einem Bereich von typlscherweise 5 bis 50 A. In diesem Betriebszustand wird ein diffuser Lichtbogenansatz 4 durch eine hohe Kathodentemperatur erreicht, die den starken Verengungseffekt von hohen Drücken überwindet. Die durch die hohe Kathodentemperatur erzielten guten Bedingungen für die Elektronenemission sind über der gesamten Fläche der Kathodenarbeitsfläche vorhanden. Unter solchen Bedingungen bildet der Lichtbogenansatz 4 den Großteil des Bereichs der Spitze / Kathodenarbeitsfläche bzw. mehr als 50% bis 100% des Bereichs der Spitze. Es scheint, dass der Lichtbogenansatz 4 den Bereich der Spitze / Kathodenarbeitsfläche vollständig und zusätzlich den folgenden Teil des Außenzylindermantels der Kathode abdeckt.

Bei diesem Lichtbogenansatz ist die Temperatur gleichmäßig verteilt, mit niedrigen Temperaturgradienten (ca. 100°C/mm) an der Kathodenarbeitsfläche und niedriger Materialbelastung, wodurch eine höhere Beständigkeit des Materials gegen Erosion aufgrund von Änderungen der Kathodentemperatur erzielt wird. Die Ursache dieser zeitlichen Temperaturänderungen liegt in der Regulierung des Lampenstroms, durch die eine bestimmte Laserleistung für die jeweilige Anwendung erreicht werden soll. Bei dieser Regulierung handelt es sich um den so genannten "Schaltmodus", in dem die Lampe einige Sekunden lang (typischerweise 0,5 bis 20 Sekunden) unter voller Leistung steht und danach einige Sekunden lang auf niedrigen Strom geschaltet wird, um den Laser in den Standbymodus zu versetzen. Ist die Anwendung eine Chargenverarbeitung, wird der Laser 10 s zum Schneiden, Schweißen oder Bohren eingesetzt, wobei der Lampenstrom 40 A und die Lampenleistung 10 kW betragen. Während dann das Werkstück bewegt wird, geht der Laser für weitere 10 s in den Standbymodus, was einer Lampenleistung von 6 A oder 1 kW entspricht. Wird der Strom verändert, ändert sich auch entsprechend die Temperatur an der Kathode, z.B. 2.500 °C bei 40 A bis 2.000 °C bei 6 A. Die Lebensdauer solcher Kathoden kann mehr als 1.000 Stunden betragen, sogar im Schaltmodus.

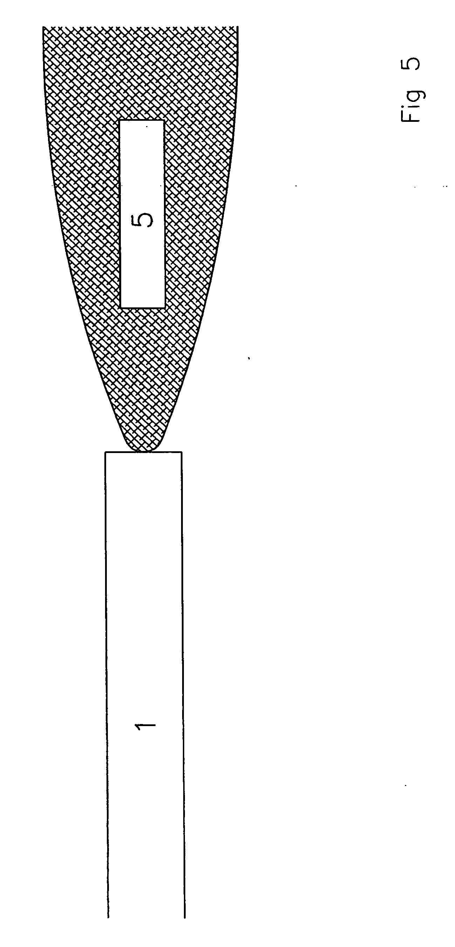

Im Vergleich dazu handelt es sich bei dem Lichtbogenansatz 5 gemäß Fig. 5 um einen so genannten kontrahierten Ansatz (Spot-Modus), der für Hochdrucklampen mit einer Kaltkathode typisch ist, bei denen die Kathodentemperaturen einiges unter 1.800 °C betragen. Diese Kathoden sind normalerweise mit einem Emittermaterial versehen, das die Betriebsfunktion der Kathode herabsetzt, so dass die Elektronenemission bei Temperaturen unter 1.800 °C stattfinden kann, selbst um Ströme von 50 A zu erzielen. Die Temperatur wird auf einem niedrigen Wert gehalten, um die durch die Verdampfung des Elektrodenmaterials auftretende Erosion zu reduzieren. Diese Lampen sind wohlbekannt und arbeiten im Dauerstrommodus zufriedenstellend. Im Spot-Modus dagegen deckt der Lichtbogenansatz 5 einen kleinen Bereich der Kathode ab, deren Temperaturz.B. 1.700 °C beträgt und die einen Durchmesser von 1 mm oder weniger hat, umgeben von Material mit einer sehr viel niedrigeren Temperatur, was zu Temperaturgradienten von bis zu 10.000 °C/mm führt. Wird der oben beschriebene Schaltmodus bei dieser Art von Kathoden angewendet, führt dies zu einer sehr viel höheren mechanischen Belastung als im Fall der Stiftkathode mit diffusem Lichtbogenansatz. Die Lebensdauer dieser Art von Kathoden ist im Vergleich zur Stiftkathode 1 mit diffusem Lichtbogenansatz 4 kürzer. Kathoden dieses Typs erreichen im Schaltmodus selten eine Lebensdauer über 250 Stunden.

Der Startvorgang einer Gasentladungslampe ist ein komplizierter zeitabhängiger Prozess, in dem das Lampengas aus dem kalten Zustand (Raumtemperatur), in dem es einen guten Isolator darstellt, in den heißen Zustand (7.000 bis 15.000 K bei Edelgasentladungslampen), in dem ausreichend Elektronen-/lonenpaare vorhanden sind, überführt wird, um den elektrischen Strom durch das Gas zu leiten. Dieser Vorgang wird am Beispiel eines typischen lampengepumpten NdYAG-Lasers (z.B. Trumpf-Laser HL 4006 D) beschrieben.

Allerdings ist die Zündung einer Lampe ein statistischer Prozess, der aus den unterschiedlichsten Gründen fehlschlagen kann. Bei einem solchen Fehlschlag kann der Lichtbogen nicht auf die oben beschriebene Weise hergestellt werden, so dass der Lampenwlderstand wieder sehr hohe Werte einnimmt. Daraus resultiert eine hohe Spannung, die maximal der Leerlaufspannung der jeweiligen Stromversorgung entspricht, die typischerweise 500 bis 1.000 V beträgt.

Um eine Beschädigung des Lasers bzw. des Stromregulierungssystems zu vermeiden, wird dieser ZOndausfall detektiert, was zu einer Abschaltung der Stromversorgung und einer Fehlermeldung für den Benutzer führt. Der Detektor benutzt die zu einem bestimmten Zeitpunkt (typischerweise 1-10 ms nach der Zündung) herrschende Lampenspannung als sicheren Sensor für den Lampenzustand. Normalerweise beträgt die Spannung 3 bis 7 ms nach der Zündung ungefähr 300 V. Also wird die Spannung z.B. nach 5 ms gemessen. Übersteigt sie dann nicht einen Wert von z.B. 400 V, entscheidet das System, dass die Zündung erfolgreich war. Übersteigt die Spannung einen Wert von z.B. 400 V, wird von einem Ausfall der Zündung ausgegangen, und das Regulierungssystem geht in den Ausfallzustand. Für dieses Verfahren müssen Kenntnisse über das zeitliche Verhalten des Lampenzündvorgangs und über reproduzierbare Zündbedingungen über die Lebensdauer der Lampe vorhanden sein. Die obigen Ausführungen machen klar, dass dieses Verhalten für den jeweils in Gebrauch befindlichen Lampentyp eindeutig ist.

Lampen vom Standardtyp haben eine spitze Kathode, die den vollen Durchmesser der Entladungsröhre in einem Bereich von einigen Millimetern hinter der Spitze erreicht. Die Kathode berührt dann fast das Quarzmaterial, wodurch ein Gasspalt von ungefähr 10 bis 20 µm entsteht, so dass das Gas eine Kühlung bewirkt und die Temperatur der Kathode auf einem niedrigen Wert gehalten wird. Diese Ausführung sowie das Vorhandensein des Emittermaterials, das eine Kaltkathode befähigt, Elektronen zu emittieren, führt zu einem kontrahierten Lichtbogenansatz (Spot-Modus), der selbst beim Startvorgang der Lampe an der Spitze der Kathode deutlich ausfällt. Somit zeigen diese Lampen ein reproduzierbares Zündverhalten, das leicht für das oben beschriebene Zündverfahren verwendet werden kann.

Bei Lampen die gemäß DE 102 08 585 aufgrund einer stiftförmigen Kathode heiß betrieben werden treten Fehlzündungen auf.

Fehlermeldungen finden typischerweise bei einem aus 50 bzw. bei einem aus 100 Lampenstartvorgängen ab dem Kaltzustand statt. Bei einem Laser mit 16 Kavitäten und 32 Lampen ist es sehr wahrscheinlich, dass jeden zweiten Tag beim Start des Lasers eine Fehlermeldung ausgegeben wird. In einer Werkstatt mit 10 Lasern geschieht dies zweimal täglich in einem Raum.

Ein solcher Ausfall ist nicht schwerwiegend. Der Laser kann erneut gestartet werden, und erfahrungsgemäß verläuft der zweite Start erfolgreich. Dennoch sinkt das Vertrauen des Kunden zum Produkt.

Eine Verwendung von Lampen mit Stiftelektrode und dem Vorteil einer längeren Lebensdauer findet somit nicht die volle Akzeptanz der Kunden.

Dieses Problem kann zum einen gelöst werden, indem die Steuereinheit für die Lampenleistung so modifiziert wird, dass sie für die nun geänderten Eigenschaften der neuen Stiftlampe angewendet werden kann. Diese Methode begrenzt jedoch die Anwendung der Stiftkathodenlampe auf neue Lasersysteme, was den Markt für die Stiftlampen verkleinert und die Lagerungs- und Lieferungsverwaltung erschwert.

Zum anderen kann dieses Problem gelöst werden, indem die modifizierte Ausführung der Steuereinheit für die Lampenleistung auf bereits auf dem Markt befindliche Laser angewendet wird, z.B. durch den Austausch einer Leiterplatte oder durch die Verwendung einer anderen Software für die Mikroprozessoreinheit. Dies führt zu enormen Kosten, die durch die Wartund von Lasergeräten weltweit entstehen und wegen des während der Angleichung an die geänderte Ausführung erforderlichen Produktionsstops nicht von allen Kunden akzeptiert werden.

Erfindungsgemäß wird dieses Problem gelöst, indem die Stiftkathodenlampe so modifiziert wird, dass sie bei der Lampenzündung kompatibel mit der Standardlampe ist. Dies wird erreicht durch eine Lampe gemäß Anspruch 1.

Dadurch erreicht das System in der Zündphase der Lampe eine größere Stabilität. Die Stabilität wird sogar noch höher, wenn das Gasvolumen am zum Entladungsraum gerichteten Ende der Kathode und um dieses herum auf den kleinstmöglichen Wert vermindert wird, der noch die Kathode mit hoher Temperatur und diffusem Lichtbogenansatz bereitstellt. Erfindungsgemäß hat die Stiftlampe eine grundlegende neue Eigenschaft hinzugewonnen: Sie ist in Bezug auf die Lampenzündung mit Standardlampen kompatibel. Die Lampe kann nun in jedem beliebigen Laser eingesetzt werden, und jede Einschränkung auf ein bestimmtes Herstelldatum des Lasersystems ist hinfällig geworden.

## Patentansprüche

1. Laseranregungslampe mit einer Entladungsröhre aus Quarzglas, sowie einer heiß be-triebenen Glühkathode (1) in Form eines Stiftes, wobei die Laseranregungslampe eine Verminderung des Gasraumvolumens im Bereich der Glühkathode (1) aufweist, wobei die Verminderung durch eine Verminderung des Abstandes zwischen der Kathode und der Entladungsröhre gebildet wird, **dadurch gekennzeichnet, dass** die Verminderung des Abstandes zwischen der Kathode und der Entladungsröhre durch einen vergrößerten Außendurchmesser der Kathode gebildet wird und die Glühkathode an dem Entladungsraum abgewandten Ende mit einer Temperatur von mehr als 1800°C versorgbar ist.

2. Lampe nach Anspruch 1, wobei das verminderte Volumen einen zwischen der Kathodendurchführungsdichtung und 3 mm vor der Kathode sich entlang des Stifts erstreckenden Bereich vollständig oder teilweise abdeckt.

3. Lampe nach einem der vorhergehenden Ansprüche, **dadurch gekennzeichnet, dass** eine weitere Volumenverminderung erreicht wird, indem der Innendurchmesser der Entladungsröhre im Bereich der Stiftkathode reduziert wird.

4. Lampe nach einem der vorhergehenden Ansprüche, **dadurch gekennzeichnet, dass** eine weitere Volumenverminderung erreicht wird, indem das Volumen der Entladungsröhre im Bereich der Stiftkathode gefüllt wird.

5. Lampe nach einem der vorhergehenden Ansprüche, **dadurch gekennzeichnet, dass** der Abstand zwischen der Kathodenoberfiäche und der der Kathode zugewandten Oberfläche des umgebenden Materials des verminderten Volumens größer als 0,5 mm ist.

6. Lampe nach einem der vorhergehenden Ansprüche, **dadurch gekennzeichnet, dass** der Durchmesser des Stifts weniger als 3 mm beträgt.

7. Lampe nach einem der vorhergehenden Ansprüche, wobei die Lampendichtung und die Stromeinspeisung die einzigen mit der Kathode gekoppelten Wärmeleiter sind.

8. Lampe nach einem der vorhergehenden Ansprüche, wobei der Durchmesser des durch die Lampendichtung führenden Drahts größer als 0,9 mm und kleiner als der Innendurchmesser der die Dichtung bildenden Quarz- oder Glashülle ist.

9. Lampe nach einem der vorhergehenden Ansprüche, wobei das verminderte Volumen zylinderförmig ist.

10. Verfahren zur Herstellung einer lasergepumpten Lampe nach Anspruch 1, **dadurch gekennzeichnet, dass** Quarzglasröhren mit unterschiedlichem Innendurchmesser miteinander verbunden sind und eine Quarzglasröhre mit einem kleinen Durchmesser entlang der Kathode angeordnet ist.

11. Verwendung einer lasergepumpten Lampe nach Anspruch 1 in einem Lasergerät vom Typ HPSSL (Hochleisfungsfestköriaser), **dadurch gekennzeichnet, dass** die Laserlampe eine Stiftkathode besitzt und der Gasraum um die Kathode in Bezug auf den Gasraum der weiteren Entladungsröhre vermindert ist.

## Claims

1. A laser excitation lamp with an arc tube made of quartz glass and a hot driven incandescent cathode (1) in the form of a pin, wherein the laser excitation lamp comprises a reduction of the gas room volume in the region of the incandescent cathode (1), wherein the reduction is formed by a reduction in the distance between the cathode and the arc tube, **characterized in that** the reduction in the distance between the cathode and the arc tube is formed by an increased outer diameter of the cathode and the incandescent cathode can be supplied with a temperature in excess of 1800 °C at the end facing away from the discharge room.

2. The lamp according to Claim 1, wherein the reduced volume covers completely or in part an area along the pin extending between the cathode lead through seal and 3 mm in front of the cathode.

3. The lamp according to any one of the preceding claims, **characterized in that** a further reduction in volume is achieved by decreasing the inside diameter of the arc tube in the region of the pin cathode.

4. The lamp according to any one of the preceding claims, **characterized in that** a further reduction in volume is achieved by filling the volume of the arc tube in the region of the pin cathode.

5. The lamp according to any one of the preceding claims, **characterized in that** the distance between the cathode surface and the surface of the surrounding material of the reduced volume facing the cathode is in excess of 0.5 mm.

6. The lamp according to any one of the preceding claims, **characterized in that** the diameter of the pin is less than 3 mm.

7. The lamp according to any one of the preceding claims, wherein the lamp seal and the current feeder are the only heat conductors coupled to the cathode.

8. The lamp according to any one of the preceding claims, wherein the diameter of the wire passing through the lamp seal is in excess of 0.9 mm and less than the inner diameter of the quartz or glass envelope forming the seal.

9. The lamp according to any one of the preceding claims, wherein the shape of the reduced volume is cylindrical.

10. A method for manufacturing a laser-pumped lamp according to Claim 1, **characterized in that** quartz glass tubes having different inner diameters are connected to each other and one quartz glass tube having a small diameter is arranged along the cathode.

11. A use of a laser-pumped lamp according to Claim 1 within a laser device of type HPSSL (high-power solid state laser), **characterized in that** the laser lamp has a pin cathode and the gas room around the cathode is reduced as compared with the gas room of the further arc tube.

## Revendications

1. Lampe d'excitation laser avec un tube de déchargement en verre de quartz ainsi qu'une cathode incandescente exploitée à chaud (1) sous forme d'une tige, dans laquelle la lampe d'excitation laser présente une réduction du volume d'espace gazeux dans la région de la cathode incandescente (1), dans laquelle la réduction est formée par une réduction de l'écart entre la cathode et le tube de déchargement, **caractérisée en ce que** la réduction de l'écart entre la cathode et le tube de déchargement est formée par un diamètre externe agrandi de la cathode et la cathode incandescente peut être alimentée à l'extrémité détournée de l'espace de déchargement avec une température supérieure à 1800°C.

2. Lampe selon la revendication 1, dans laquelle le volume réduit recouvre entièrement ou partiellement une région entre le joint de traversée de la cathode et 3 mm avant la cathode s'étendant le long de la tige.

3. Lampe selon l'une quelconque des revendications précédentes, **caractérisée en ce qu'**une réduction de volume supplémentaire est obtenue en réduisant le diamètre interne du tube de déchargement dans la région de la cathode à tige.

4. Lampe selon l'une quelconque des revendications précédentes, **caractérisée en ce qu'**une réduction de volume supplémentaire est obtenue en remplissant le volume du tube de déchargement dans la région de la cathode à tige.

5. Lampe selon l'une quelconque des revendications précédentes, **caractérisée en ce que** l'écart entre la surface de la cathode et la surface tournée vers la cathode du matériau qui l'entoure du volume réduit est supérieur à 0,5 mm.

6. Lampe selon l'une quelconque des revendications précédentes, **caractérisée en ce que** le diamètre de la tige est inférieur à 3 mm.

7. Lampe selon l'une quelconque des revendications précédentes, dans laquelle le joint de la lampe et l'alimentation électrique sont les seuls thermoconducteurs raccordés à la cathode.

8. Lampe selon l'une quelconque des revendications précédentes, dans laquelle le diamètre du fil menant à travers le joint de la lampe est supérieur à 0,9 mm et inférieur au diamètre interne de l'enveloppe de quartz ou de verre formant le joint.

9. Lampe selon l'une quelconque des revendications précédentes, dans laquelle le volume réduit est cylindrique.

10. Procédé de fabrication d'une lampe à pompage laser selon la revendication 1, **caractérisé en ce que** des tubes de verre de quartz de diamètre interne différent sont reliés ensemble et un tube de verre de quartz avec un faible diamètre est disposé le long de la cathode.

11. Utilisation d'une lampe à pompage laser selon la revendication 1 dans un appareil laser du type HPSSL (laser solide haute performance), **caractérisée en ce que** la lampe laser possède une cathode à tige et l'espace gazeux autour de la cathode est réduit par rapport à l'espace gazeux du tube de déchargement supplémentaire.
